# EUROPEAN PATENT APPLICATION

(11) **EP 2 695 667 A2**
(43) Date of publication of application: **12.02.2014**
(21) Application number: 13178028.0
(22) Date of filing: 25.07.2013
(51) Int. Cl.: B01D 63/08

(54) **Fluid treatment assemblies, fluid treatment segments, and methods of making fluid treatment systems**

(30) Priority: 10.08.2012 US 201213571633
(71) Applicant: Pall Corporation, Port Washington, NY 11050 (US)
(72) Inventor: SAYER, Cheryl, Lowell, MA Massachusetts 01852 (US); MESSIER, Sylvia, Stow, MA Massachusetts 01775 (US)
(74) Representative: Hoeger, Stellrecht & Partner Patentanwälte

(57) **Abstract**

A fluid treatment assembly includes a stack of fluid treatment segments. Each fluid treatment segment has an array of fluid treatment units positioned between opposite end plates and a retainer that compresses the end plates and the array of fluid treatment units against one another. The fluid treatment segments may be stacked between opposite end pieces of a holder to form the fluid treatment assembly.

## Description

### Disclosure of the Invention

The present invention relates to fluid treatment assemblies, fluid treatment segments, and methods of making fluid treatment systems arranged to treat any of numerous fluids in a wide variety of ways in single- or multi-use applications.

A fluid treatment assembly embodying the invention may comprise a stack of two or more fluid treatment segments. Each fluid treatment segment may, in turn, comprise an array of fluid treatment units, each including a feed region, a permeate region, and at least one layer of a permeable fluid treatment medium. The permeable medium may be positioned between the feed region and the permeate region and may have a feed side in fluid communication with the feed region and a permeate side in fluid communication with the permeate region. A feed passage in the array of fluid treatment units may supply fluid to be treated, i.e., feed fluid, to the feed region of one or more fluid treatment units. Some of the feed fluid may be directed from the feed region through the permeable medium, where the fluid is treated in accordance with the fluid treatment characteristics of the permeate medium, to the permeate region. A permeate passage in the array of fluid treatment units may direct the treated fluid, i.e., permeate, away from the permeate region of one or more fluid treatment units. The remainder of the feed fluid which does not pass through the permeable medium, i.e., the retentate, may be directed away from the feed region via a retentate passage in the array of fluid treatment units.

### Summary of the Invention

In accordance with one aspect of the invention, fluid treatment assemblies may comprise a stack of fluid treatment segments. Each fluid treatment segment may include an array of fluid treatment units, first and second end plates, and a retainer. Each fluid treatment unit has a feed region, a permeate region, and a permeable fluid treatment medium positioned between the feed region and the permeate region. The permeable medium has a feed side fluidly communicating with the feed region and a permeate side fluidly communicating with the permeate region. The array of fluid treatment units has one or more of a feed passage, a permeate passage, and a retentate passage. The feed passage fluidly communicates with the feed region of one or more fluid treatment units, the permeate passage fluidly communicates with the permeate region of one or more fluid treatment units, and the retentate passage fluidly communicates with the feed region of one or more fluid treatment units. The array of fluid treatment units has first and second opposite ends, and at least one of the first and second opposite ends has one or more fluid openings. Each fluid opening fluidly communicates with the feed passage, the permeate passage, or the retentate passage in the array of fluid treatment units. Each of the first and second end plates has first and second opposite surfaces. The first surface of the first end plate faces the first end of the array of fluid treatment units, and the first surface of the second end plate faces the second end of the array of fluid treatment units. The retainer extends along the array of fluid treatment units between the first and second end plates and is arranged to compress the first end plate, the array of fluid treatment units, and the second end plate together. In the stack of fluid treatment segments, the end plates of adjacent segments may be sealed to one another. Each adjacent end plate has one or more through holes extending between the first and second surfaces of the plate. The through holes of the adjacent end plates fluidly communicate with one another between a fluid opening in an end of one array of fluid treatment units and a fluid opening in an end of the adjacent array of fluid treatment units. The retainers of adjacent fluid treatment segments are separate from one another.

In accordance with another aspect of the invention, methods for making fluid treatment systems may comprise stacking fluid treatment segments to form a fluid treatment assembly between the end pieces of a holder, including aligning the through holes of adjacent fluid treatment segments. The methods further comprise pressing the end pieces against the fluid treatment assembly to seal the fluid treatment assembly, including sealing adjacent fluid treatment segments.

In accordance with another aspect of the invention, some fluid treatment segments may comprise an array of fluid treatment units, first and second end plates, and a retainer. Each fluid treatment unit has a feed region, a permeate region, and a permeable fluid treatment medium positioned between the feed region and the permeate region. The permeable medium has a feed side fluidly communicating with the feed region and a permeate side fluidly communicating with the permeate region. The array of fluid treatment units has one or more of a feed passage, a permeate passage, and a retentate passage. The feed passage fluidly communicates with the feed region of one or more fluid treatment units, the permeate passage fluidly communicates with the permeate region of one or more fluid treatment units, and the retentate passage fluidly communicates with the feed region of one or more fluid treatment units. The array of fluid treatment units has first and second opposite ends, and at least one of the first and second opposite ends has one or more fluid passages. Each fluid opening fluidly communicates with the feed passage, the permeate passage, or the retentate passage in the array of fluid treatment units. Each of the first and second end plates has first and second opposite surfaces. The first surface of the first end plate faces the first end of the array of fluid treatment units, and the first surface of the second end plate faces the second end of the array of fluid treatment units. At least one of the first and second end plates has a through hole extending between the first and second surfaces. The through hole fluidly communicates with a fluid opening in an end of the array of fluid treatment units. The through hole is defined by a wall of the end plate and further includes a lining that isolates the wall from fluid that flows through the through hole. The retainer extends along the array of fluid treatment units between the first and second end plates and is arranged to compress the first end plate, the array of fluid treatment units, and the second end plate together.

In accordance with another aspect of the invention, some fluid treatment segments may comprise an array of fluid treatment units, first and second end plates, and a retainer. Each fluid treatment unit has a feed region, a permeate region, and a permeable fluid treatment medium positioned between the feed region and the permeate region. The permeable medium has a feed side fluidly communicating with the feed region and a permeate side fluidly communicating with the permeate region. The array of fluid treatment units has one or more of a feed passage, a permeate passage, and a retentate passage. The feed passage fluidly communicates with the feed region of one or more fluid treatment units, the permeate passage fluidly communicates with the permeate region of one or more fluid treatment units, and the retentate passage fluidly communicates with the feed region of one or more fluid treatment units. The array of fluid treatment units has first and second opposite ends, and at least one of the first and second opposite ends has one or more fluid passages. Each fluid opening fluidly communicates with the feed passage, the permeate passage, or the retentate passage in the array of fluid treatment units. Each of the first and second end plates has first and second opposite surfaces. The first surface of the first end plate faces the first end of the array of fluid treatment units, and the first surface of the second end plate faces the second end of the array of fluid treatment units. At least one of the first and second end plates has a handle which allows the fluid treatment segment to be grasped and carried. The retainer extends along the array of fluid treatment units between the first and second end plates and is arranged to compress the first end plate, the array of fluid treatment units, and the second end plate together.

Fluid treatment assemblies, fluid treatment segments and methods of making fluid treatment systems which embody the invention have many advantages. For example, the reliability of the fluid treatment assemblies is significantly enhanced. All of the fluid treatment segments can be preassembled and presealed by the manufacturer, allowing each segment to be thoroughly evaluated and tested before they are shipped to a customer. The fluid treatment segments may even be filled with a preservative fluid to maintain the cleanliness and purity of the segments during storage and shipping. Further, shipping and handling the smaller, lighter, precompressed fluid treatment segments results in little or no damage to the segments compared to the significant risk of damage associated with shipping and handling a large, heavy, fully assembled fluid treatment assembly.

Equally as important, fluid treatment assemblies, fluid treatment segments, and methods of making fluid treatment systems which embody the invention provide a far more flexible, versatile, and effective solution to the problems associated with treating a wide variety of fluids. The most effective fluid treatment assembly for treating any particular fluid may be easily achieved by selecting and assembling the most appropriate combination of different fluid treatment segments, thereby providing a customized solution for each unique application. Should conditions change, a different combination of fluid treatment segments may be quickly and easily assembled by simply replacing one or more of the fluid treatment segments of the fluid treatment assembly. Further, in the unlikely event that a fluid treatment segment is damaged, e.g., in shipping, only the defective fluid treatment segment and not the entire fluid treatment assembly may be replaced, greatly reducing downtime and waste.

Many additional advantageous and features of various embodiments of the invention are further disclosed in the following description and accompanying drawings.

### Brief Description of the Drawings

Fig. 1 is a representative view of a fluid treatment assembly having a plurality of fluid treatment segments.

Fig. 2 is an oblique view of a fluid treatment assembly having a plurality of fluid treatment segments, each segment comprising a plurality of cassettes.

Fig. 3 is an oblique view of a fluid treatment segment comprising a plurality of cassettes.

Fig. 4 is a partial sectional view of an end plate having a lining in a through hole.

Fig. 5 is an oblique view of a fluid treatment system including a fluid treatment assembly in a holder.

Fig. 6 is an oblique end view of a stack of fluid treatment segments having a keying mechanism.

### Description of Embodiments of the Invention

Fluid treatment assemblies embodying one or more aspects of the invention may be configured in a wide variety of ways. Generally, a fluid treatment assembly may comprise a stack of fluid treatment segments. The stack of fluid treatment segments may be oriented vertically, horizontally, or at any angle between the vertical and the horizontal, and the fluid treatment segments of any one fluid treatment assembly may all be identical to, similar to, or very different from one another.

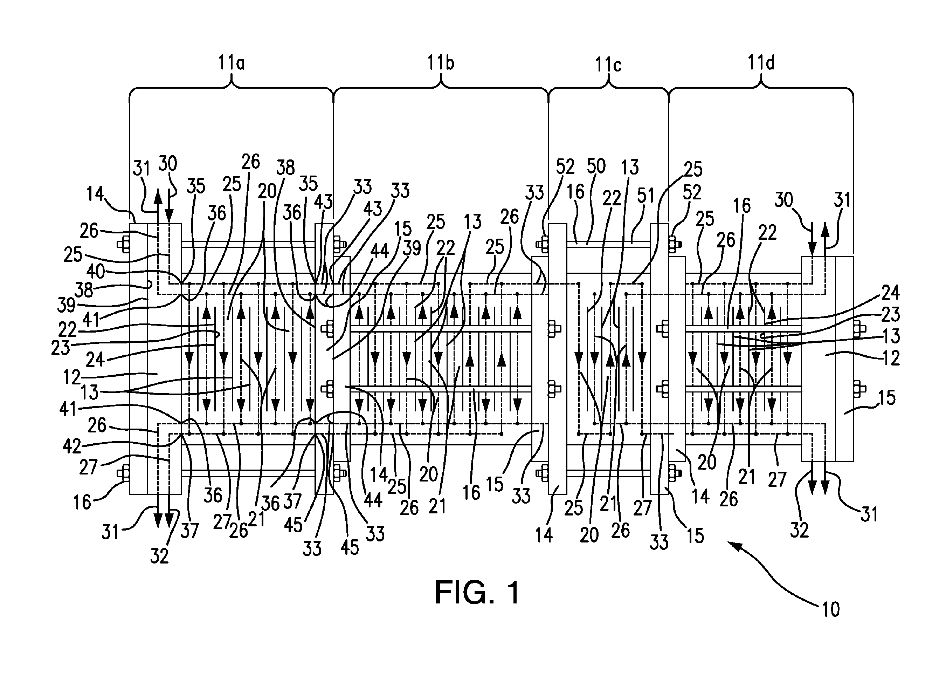

One of many different examples of a fluid treatment assembly 10 is shown in Fig. 1. The stack of fluid treatment segments may comprise any number of segments. For example, the stack may comprise one or more, e.g., twenty-five or fewer, or fifteen or fewer, or ten or fewer, or eight or fewer, or six or fewer, fluid treatment segments. In Fig. 1, the fluid treatment assembly may comprise a stack of four fluid treatment segments 11a-11d. For many embodiments, a fluid treatment assembly may also include one or more manifolds 12. A manifold functions to supply fluid, e.g., process or feed fluid, from an external system to the fluid treatment segments and/or to discharge fluid, e.g., permeate or retentate, from the fluid treatment segments to the external system. A manifold may be a structure separate from the fluid treatment segments. For example, one or more manifolds may be positioned at one or both ends of the stack of fluid treatment segments and/or between adjacent fluid treatment segments in the stack. Alternatively or additionally, one or more manifolds 12 may be integrated in one or more of the fluid treatment segments 11, as shown in Fig. 1.

A fluid treatment segment may be configured in any of numerous ways. Generally, each fluid treatment segment 11 may include an array of fluid treatment units 13 compressed and/or sealed between first and second opposite end plates 14, 15 by a retainer 16. For embodiments in which the manifold 12 is integrated in the fluid treatment segment 11, the segment 11 may include the manifold 12 positioned at the end of, or within, the array of fluid treatment units 13 and compressed and/or sealed between the end plates 14, 15 by the retainer 16. Each fluid treatment unit 13 may comprise a feed region 20, a permeate region 21, and a permeable fluid treatment medium 22 positioned between the feed region 20 and the permeate region 21. The permeable medium 22 may have a feed side 23 which fluidly communicates with, and may contact, the feed region 20 and a permeable side 24 which fluidly communicates with, and may contact, the permeate region 21. The permeable medium 22 treats any fluid flowing from the feed region 20 through the permeable medium 22 to the permeate region 21 in accordance with the fluid treatment characteristics of the permeable medium 21.

Each fluid treatment segment may further include various fluid passages for directing fluid to or from the permeable media through the segment and/or the manifold. Each fluid passage may extend through all or a portion of the array of fluid treatment units, through one or both end plates, and/or through the manifold. The fluid passages may include one or more of a feed passage 25, a permeate passage 26, and a retentate passage 27. For example, a fluid treatment segment may have one or more feed passages and one or more permeate passages but no retentate passages, or it may have one or more feed passages, one or more permeate passages, and one or more retentate passages. A feed passage 25 may fluidly communicate with the feed region 20 of one or more fluid treatment units 13, a permeate passage 26 may fluidly communicate with the permeate region 21 of one or more fluid treatment units 13, and a retentate passage 27 may fluidly communicate with the feed region 20 of one or more fluid treatment units 13 of each segment 11.

The fluid passages in each fluid treatment segment may be arranged in a variety of ways to direct fluid in a serial, parallel, or a combined serial/parallel manner through the segment. Further, the fluid passages in each segment may be arranged for direct or dead-end flow through the permeable fluid treatment media or for tangential or cross flow along and through the permeable media. For example, the first and fourth fluid treatment segments 11a, 11d shown in Fig. 1 may be arranged for cross flow in parallel along the feed sides 23 and flow in parallel along the permeate sides 24 of all of the permeable media 22. Process or feed fluid may be supplied from an external system to a feed inlet 30 of a manifold 12 and then directed by the feed passage 25 through the manifold 12 and the array of fluid treatment units 13 to the feed regions 20, where the feed fluid passes in parallel along the feed regions 20 and the feed sides 23 of the permeable media 22. A portion of the feed fluid may then pass as permeate or filtrate through the permeable media 22 of each segment 11a, 11d to the permeate side 24. The permeate may then flow in parallel along the permeate regions 21 and the permeate sides 24 of the permeable media 22 to the permeate passage(s) 26. The permeate may then be directed by a permeate passage 26 through the array of fluid treatment units 13 and the manifold 12 to a permeate outlet 32 of a manifold 12, where the permeate is discharged from the fluid treatment assembly 10 to the external system. The portion of the feed fluid which does not pass through the permeable medium 22 may pass as concentrate or retentate into a retentate passage 27 that fluidly communicates with the feed passage 25 via one or more of the feed regions 20. The retentate passage 27 may further direct the retentate through the array of fluid treatment units 13 and the manifold 12 to a retentate outlet 32 of a manifold 12, where the retentate is discharged from the fluid treatment assembly 10 to the external system.

Although all of the fluid treatment segments of a fluid treatment assembly may be similarly arranged, e.g., for parallel cross flow of the feed fluid and/or parallel flow of the permeate, one or more of the segments may be differently arranged. For example, the feed passages of the second fluid treatment segment 11b of the fluid treatment assembly 10 shown in Fig. 1 may be arranged for series/parallel cross flow of feed fluid through the feed regions 20 and along the feed sides 23 of the permeable media 22, while the permeate passages 26 may be arranged for parallel flow of the permeate through the permeate regions 21 and along the permeate sides 24 of the permeable media 22. As another example, the feed passages 25 in the third fluid treatment segment 11c may be arranged for a series cross flow of feed fluid through the feed regions 20 and along the feed sides 23 of the permeable media 22, and the permeate passages 26 may also be arranged for series flow of permeate through the permeate regions 21 and along the permeate sides 24 of the permeable media 22.

The fluid passages may extend from one fluid treatment segment to an adjacent fluid treatment segment, or between a fluid treatment segment and an adjacent manifold via one or more through holes in the end plates. For example, the feed passages 25 and the permeate passages 26 of the adjacent first and second fluid treatment segments 11a, 11b each fluidly communicate via through holes 33 in the adjacent end plates 14, 15. Although fluid passages of the same type, i.e., feed, permeate, or retentate passages, may fluidly communicate with one another between adjacent fluid treatment segments via the through holes, the fluid treatment segments may also be arranged with fluid treatment passages of different types fluidly communicating via the through holes. For example, the feed passage 25 of the third fluid treatment segment 11c may fluidly communicate with the retentate passage 11d of the fourth fluid treatment segment 11d via through holes 33 in the adjacent end plates 14, 15. A fluid passage may also be initiated or terminated within the fluid treatment assembly by the absence of a through hole in the end plate. For example, the retentate passage 27 in the first fluid treatment segment 11a may be terminated by the absence of a through hole at a corresponding location in the adjacent first end plate 14 of the second fluid treatment segment 11b. Alternatively, the retentate passage in the first fluid treatment segment may be terminated by the absence of through hole at a corresponding location in the second end plate of the first segment. Similarly, the permeate passages 26 of the second fluid treatment segment 11b may be terminated by the absence of through holes in corresponding locations of either the first end plate 14 of the third fluid treatment segment 11c or the second end plate of the second fluid treatment segment. Alternatively, a fluid passage may be initiated or terminated by sealing the passage within the array of fluid treatment units. For example, the permeate passage 26 of the third fluid treatment segment 11c may be initiated by sealing the end of the passage 26 within the array itself. The fluid passages of different fluid treatment assemblies may thus be arranged in a great variety of ways depending, for example, on the overall flow pattern and the course of fluid treatment desired for each assembly.

The components of a fluid treatment segment may be configured in a wide variety of ways. For example, many of the components of a fluid treatment segment may be configured in ways similar to the components disclosed in United States Patent Application No. 12/954,118 filed on November 24, 2010 and entitled Manifold Plates and Fluid Treatment Arrangements Including Manifold Plates; United States Patent Application No. 61/476,874 filed on April 19, 2011 and entitled Fluid Treatment Arrangements and Methods of Making Fluid Treatment Arrangements; United States Patent Application No. 61/522,706 filed on August 12, 2011 and entitled Fluid Treatment Assemblies, Manifolds for Fluid Treatment Assemblies, and Methods for Treating Fluids; and United States Patent Application No. 13/293,568 filed on November 10, 2011 and entitled Fluid Treatment Assemblies.

The fluid treatment units may have any of numerous structures, sizes, and shapes. Each feed region and/or permeate region may be structured, for example, as a spacer to space the permeable medium layers from one another and/or as a distributor/collector to distribute or collect fluid along the feed side or permeate side of each permeable medium. In some embodiments, a feed region and/or a permeate region may be configured as a frame or as a channeled plate. In many embodiments, the feed region and/or the permeate region may be configured as a porous sheet, e.g., as a woven or nonwoven fibrous filamentous sheet or a woven, expanded, or extruded mesh sheet, and fluid may flow generally edgewise along the porous sheet, i.e., through the porous sheet generally parallel to the major surfaces of the sheet.

The fluid treatment medium may be permeable, i.e., porous, permeable, semi permeable, or perm selective, and may be formed from any of numerous materials, including, for example, a natural or synthetic polymer. The fluid treatment medium may be fashioned as any of a wide variety of structures, including, for example, a fibrous or filamentous structure, such as a woven or non-woven sheet, or a membrane, such as a supported or unsupported membrane. Further, the fluid treatment medium may have, or may be modified to have, any of a myriad of fluid treatment characteristics. For example, the fluid treatment medium may have a positive, negative or neutral electrical charge or polarity; it may be liquiphobic or liquiphilic, including hydrophobic or hydrophilic or oleophobic or oleophilic; and/or it may have attached functional groups, such as ligands or any other reactive moiety, that can chemically bind to substances in the fluid. The fluid treatment medium may be formed from, impregnated with, or otherwise contain a variety of materials that function to further treat the fluid in any of numerous ways. These functional materials may include, for example, sorbents, ion exchange resins, chromatography media, enzymes, reactants, or catalysts of all types that may chemically and/or physically bind, react with, catalyze, deliver, or otherwise affect substances in the fluid or the fluid itself. Further, the fluid treatment medium may have any of a wide range of molecular cutoffs or removal ratings, for example, from ultraporous or nanoporous or finer to micoporous or coarser. The fluid treatment medium may thus function as a treatment medium of any type, including a capture medium or a separation medium such as a filtration medium.

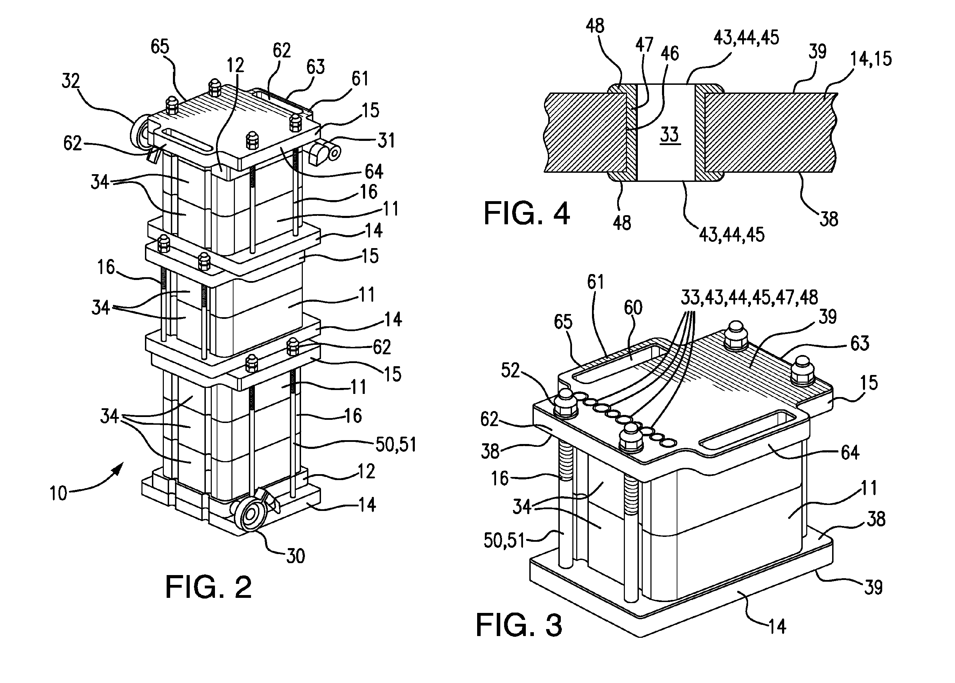

The array of fluid treatment units has first and second opposite ends and may include any number of fluid treatment units positioned near, e.g., stacked side-by-side along, one another, with or without one or more intervening structures. For many embodiments some or all of the fluid treatment units may be facing, adjacent to, in contact with, and/or sealed to one another. Each fluid treatment unit may have a separate feed region and/or a separate permeate region, or adjacent fluid treatment units may share a common feed region 20 or a common permeate region 21 between adjacent permeable media 22, as shown in Fig. 1. In many embodiments, the array of fluid treatment units may be arranged as two or more cassettes 34. Each cassette 34 comprises a plurality of fluid treatment units, which may be encased, for example, in a thermoplastic or thermosetting material, as shown in Figs. 2 and 3. The cassettes 34 of a fluid treatment segment 11 may be positioned near, e.g., stacked side-by-side along, one another, with or without intervening structures. For example, the cassettes may be stacked against and sealed to one another, a manifold, or an end plate.

The fluid passages, e.g., the feed passages 25, the permeate passages 26, and the retentate passages 27, may be configured in a variety of ways. For example, each fluid passage may be formed by aligned openings in the feed regions 20, the permeate regions 21, and the permeable media 22 that extend through the array of fluid treatment units 11, e.g., through the stack of cassettes 34. At one or both ends of the array, each fluid passage 25, 26, 27 may open onto the end of the array, for example at a feed opening 35, a permeate opening 36, or a retentate opening 37. For some embodiments, each of the fluid passages may extend completely through the array of fluid treatment units, e.g., through the stack of cassettes, and open at both ends of the array. For other embodiments, one or more of the fluid passages may terminate within the array, e.g., within a cassette, and open at only one end of the array.

The manifold 12 may be configured in many different ways and may have a variety of shapes and sizes. Examples of manifolds are disclosed, for example, in United States Patent Application Publication No. US 2008/0132200 Al entitled Filtration Assemblies, Filtration Manifolds, Filtration Units, and Methods for Channeling Permeate, as well as in previously referenced United States Patent Application No. 12/954,118 and United States Patent Application No. 61/522,706. The feed inlet 30 and the permeate and retentate outlets 31, 32 of the manifold 12 may be positioned on one or more edges of the manifold and may be configured as fittings that may be coupled to fluid conduits of the external system. The manifold 12 may also include a mounting surface on one or both major opposite sides. Each fluid passage, e.g., the feed passage 25, the permeate passage 26, or the retentate passage 27, may extend within the manifold 12 from the feed inlet 30, the permeate outlet 31, or the retentate outlet 27 to a feed opening 40, a permeate opening 41, or a retentate opening 42, respectively, in the mounting surface of the manifold 12. The end of an array of fluid treatment units, e.g., the end of the stack of cassettes, may be positioned against and sealed to the mounting surface of the manifold with one or more of the fluid openings in the mounting surface of the manifold fluidly communicating with one or more fluid openings in the end of the array. For example, in the embodiment of Fig. 1, the end of the array of fluid treatment units 13 of the first fluid treatment segment 11a may be positioned against and sealed to the mounting surface of the manifold 12 with the feed, permeate, and retentate openings 40, 41, 42 in the mounting surface of the manifold 12 fluidly communicating respectively with the feed, permeate, and retentate openings 35, 36, 37 at the end of the array of the fluid treatment units 13 of the first fluid treatment segment 11a.

The end plates 14, 15 may be configured in many different ways and may have a variety of shapes and sizes. Further, the end plate at one end of a fluid treatment segment may be identical to or different from the end plate at the opposite end of the segment. For many embodiments, the retainer 16 may bear directly against the end plates 14, 15 to compress and seal the components of the fluid treatment segment 11 together. Consequently, the end plates may be dimensioned and formed from a metallic material or a nonmetallic material with sufficient structural integrity to withstand the forces applied by the retainer without undue flexing. Stainless steel is an example of a metallic material with sufficient structural integrity. Examples of end plates having nonmetallic materials with sufficient structural integrity are disclosed, for example, in previously referenced United States Patent Application No. 13/293,568. Generally, each end plate 14, 15 of a fluid treatment segment 11 has first and second opposite major surfaces 38, 39. The first surface 38 of each end plate 14, 15 may face an end of the array of fluid treatment units 13 of the segment 11, with or without intervening structures. The second surface 39 of each end plate 14, 15 may face away from the array of fluid treatment units 13 of the segment.

Some end plates may be blind end plates having no fluid passages. For example, the end-most end plates of the fluid treatment assembly 10 shown in Figs. 1 and 2 may be blind end plates. In the illustrated embodiment, each blind end plate 14, 15 may be mounted against the major side of the manifold 12 opposite the end of the array of fluid treatment units 13. In other embodiments, a blind end plate may be mounted more directly against an end of the array of fluid treatment units and may terminate any fluid passages in the array that may open against the blind end plate.

Other end plates may be open end plates having one or more fluid passages within the end plate. For example, adjacent end plates 14, 15 of the adjacent fluid treatment segments 11a, 11b, 11c, 11d shown in Fig. 1 may include one or more fluid passages, e.g., a feed passage 25, a permeate passage 26, and/or a retentate passage 27, each in the form of a through hole 33. Each through hole may extend straight, at an angle, curvedly, or circuitously through the end plate between the opposite major surfaces of the end plate. The through holes 33 open onto each major surface of the end plate 14, 15 of a fluid opening, e.g., a feed opening 43, a permeate opening 44, and/or a retentate opening 45. The through holes enable the fluid passages in the adjacent fluid treatment segments to extend through the end plates and fluidly communicate with one another at the fluid openings. In some embodiments, the through holes in the end plate enable the fluid passages to extend beyond a fluid treatment segment, for example, into a manifold.

The end plates may be sealed to one another, the manifold, or the ends of the array of fluid treatment units in a variety of ways. For some embodiments, gaskets, for example, in annular form or in the form of a sheet having appropriately located openings, may be positioned around the fluid openings between the end plate and the end of the array, e.g., the end of the stack of cassettes, or between adjacent end plates or between an end plate and an manifold, sealing the components to one another. For other embodiments, a curable liquid sealant may be applied around the fluid openings before the components of the fluid treatment segment are compressed against one another. For many embodiments, the seal may comprise a raised surface portion of a lining that extends through the through hole. For example, as shown in Fig. 4, a wall 46, for example, a cylindrical wall, of the end plate 14, 15 may define each through hole 33. A lining 47, which may be a coating or a separate insert, may cover the entire wall 46. A raised end portion 48 of the lining 47 may extend beyond the through hole 33 onto each major surface of the end plate 14, 15 surrounding the fluid opening, e.g., the feed opening 43, the permeate opening 44, or the retentate opening 45 of the through hole 33. The lining 47, including the raised surface portion 48, may be fashioned from a material, e.g., an elastomeric material, a polymeric material, a silicone material, or a combination thereof, that functions as a seal. For example, the lining may be formed of silicone, TPE, or EPDM rubber. The lining may be a preformed insert insertable within the through hole or it may be formed in place, e.g., overmolded, within the through hole. The raised surface portion 48 of the lining 47 serves to seal the fluid openings 43, 44, 45 of one end plate 14, 15 to an adjacent end plate 14, 15, to an end of the array of fluid treatment units 13, or to a manifold 12. The lining 47 of the wall 46 isolates the wall 46 from fluid that flows through the through hole 33, enabling many different types of fluids to flow through the end plate 14, 15 without interacting with the end plate 14, 15. For example, the lining may prevent anything from leaching into the fluid from the end plate and/or ensure the end plate is not chemically attacked by the fluid. For some embodiments, the material forming the end plate may be sufficiently inert that the lining may not be included.

For many or all of the fluid treatment segments, the retainer of one fluid treatment segment is separate from the retainer of another fluid treatment segment, each retainer independently compressing and/or sealing the components of the segment. Each retainer may be configured in a wide variety of ways. For example, a retainer may comprise one or more elongate structures that extend along the array of fluid treatment units, e.g., the stack of cassettes, between the end plates of each fluid treatment segment. The elongate structure may extend along the exterior of the array of fluid treatment units or in cutouts in the array of fluid treatment units and may bear against the opposite end plates of each segment to compress and seal the components of the segment together. For some embodiments, the elongate structure may comprise one or more bands or straps that encircle and compress and/or seal the fluid treatment segment. The ends of each band may be connected, for example, via a buckle. For other embodiments, the elongate structure may comprise one or more compression rod arrangements. The compression rod arrangements may be variously configured as a threaded or an unthreaded arrangement, for example, as disclosed in United States Patent Application Publication No. US 2008/0135499 Al published on June 12, 2008 and entitled Filtration Assemblies and Methods of Maintaining Compression of Filtration Units in Filtration Assemblies. In the embodiment illustrated in Figs. 1, 2, 3, 5 and 6 each compression rod arrangement 50 may comprise a threaded compression rod 51 and a fastener 52, e.g., a nut or a bolt head, at each end of the compression rod 51. The compression rod 51 may extend through the opposite end plates 14, 15 and along the array of fluid treatment units 13, e.g., along the stack of cassettes 34. Each fastener 52 may bear against an end plate 14, 15 to establish and maintain compression and/or sealing of the components of the fluid treatment segment.

Each fluid treatment segment may include one or more additional components. For example, the fluid treatment segment may include one or more alignment rods for maintaining the fluid treatment units, including the cassettes, the manifold, and the end plates appropriately aligned with their fluid passages and openings fluidly communicating with one another. Examples of alignment rods are disclosed, for example, in United States Patent Application Publication No. US 2008/0135468 Al entitled Filtration Assemblies and Methods of Installing Filtration Units in Filtration Assemblies.

A plurality of fluid treatment segments 11 may be stacked along one another to form the fluid treatment assembly 10 in many different ways. For example, the fluid treatment segments 11 may be stacked along one another in a holder. The holder may be arranged to support the fluid treatment assembly vertically, horizontally, or at any angle between vertical and horizontal. For example, the fluid treatment segments may be stacked along the holder to form the fluid treatment assembly while the holder is in a horizontal position. The holder may then be raised to a vertical position to treat the fluid.

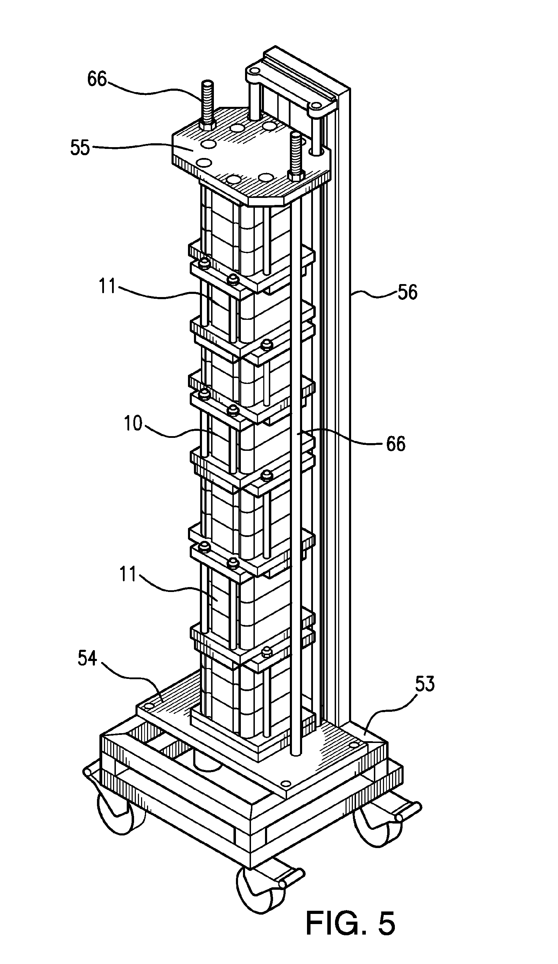

The holder may be variously configured, for example, as a mechanical. a pneumatic or a hydraulic holder. In the embodiment illustrated in Fig. 5, the holder 53 may comprise opposite end pieces 54, 55 and a frame 56 interconnecting the end pieces 54, 55. The individual fluid treatment segments 11 may be stacked between the end pieces 54, 55 of the holder 53. Stacking the segments 11 may include aligning the appropriate fluid openings 43, 44, 45 of adjacent end plates, and some or all of the segments 11 may be positioned against the frame 56 to facilitate alignment of the segments 11. One or more manifolds 12 may be integrated with the fluid treatment segments 11, as shown in Figs. 1 and 2. Alternatively or additionally, one or more manifolds separate from the fluid treatment segments may be inserted in the stack of segments and stacked along the holder, e.g., between adjacent segments and/or at the ends of the stack of segments, with the appropriate fluid openings aligned.

To even better ensure alignment of the fluid openings in the end plates of adjacent fluid treatment segments, the segments may include a keying mechanism for appropriately orienting and/or positioning the adjacent segments as they are stacked along the holder. Stacking the fluid treatment segments in the holder may then include engaging the components of the keying mechanism. The fluid openings may be located in the end plates such that when the components of the keying mechanism are engaged, the fluid openings of the adjacent end plates are appropriately aligned with one another.

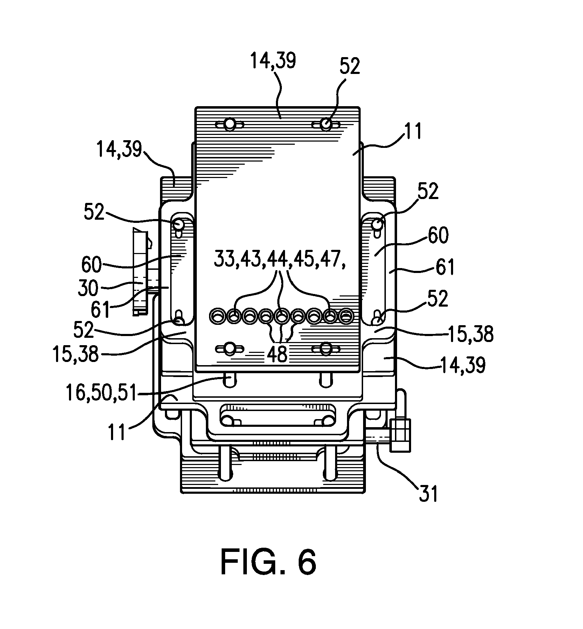

The keying mechanism may be configured in any of numerous ways. For example, the keying mechanism may include protrusions and/or recesses on adjacent end plates that cooperate to appropriately position the adjacent segments. For some embodiments, the keying mechanism may include a portion of the retainer of one fluid treatment segment and one or more features on an adjacent fluid treatment segment that cooperates with the retainer portion to appropriately position the adjacent segments. The retainer portion may, for example, include the end of a compression rod 51 or a fastener 52 of a compression rod arrangement 50, as shown in Fig. 6. The cooperating feature of the adjacent fluid treatment segment may be variously configured. For example, a first fluid treatment segment 11 may include as the cooperating feature a recess, e.g., an aperture 60, that closely receives the retainer portion, e.g., a fastener 52, of an adjacent second fluid treatment segment 11. The aperture may be configured in any of numerous ways. For example, the aperture 60 may be defined by a handle 61 that is formed on an end plate 14, 15 and enables the segment to be grasped. Handles may be variously configured and are particularly advantageous because they allow the fluid treatment segments to be easily carried and/or conveniently stacked on the holder. Each retainer portion, e.g., each fastener 52, of the second fluid treatment segment 11 may closely fit in the aperture 60, e.g., in a crook of the aperture 60 defined by the handle 61, of the first fluid treatment segment 11, limiting the available positions of the adjacent segments 11 to the appropriate position for aligning the fluid openings in the adjacent end plates 14, 15.

For many embodiments, the fluid treatment assembly 10 may have first and second opposite sides 62, 63 and third and fourth opposite side 64, 65. The retainer 16 of a first fluid treatment segment 11 may extend along the first and second opposite sides 62, 63 and not along the third and fourth opposite sides 64, 65, while the retainer of an adjacent second fluid treatment segment 11 may extend along the third and fourth opposite sides 64, 65 and not along the first and second opposite sides 62, 63. Handles 61 and cooperating apertures 60 may be formed on opposite sides of an end plate 14, 15 of each fluid treatment segment 11, e.g., the sides along which the retainer 16 of the segment 11 does not extend. The fluid treatment segments 11 may then be stacked along the holder 53 with the appropriate fluid openings 43, 44, 45 in adjacent end plates fluidly communicating with one another by fitting the retaining portion, e.g., the fasteners 52, of one fluid treatment segment 11 into the aperture, e.g., the apertures 60 defined by the handles 61, of an adjacent fluid treatment segment 11, as shown, for example, in Fig. 5.

Alternatively, for some embodiments the keying mechanism and the handle may be independent of one another. For example, the recess of the keying mechanism may comprise one or more indentations in, or holes through, an end of one fluid treatment segment that closely receives a protrusion, e.g., a portion of the retainer, of an adjacent segment. The recess may be spaced from and may not form any part of any handle on the fluid treatment segment. The handle may be configured with or without an aperture. For example, the handle may comprise a separate indentation in, or a knob on, the fluid treatment segment that enables the segment to be grasped and carried. In other embodiments, a fluid treatment segment may include a keying mechanism and no handle, a handle and no keying mechanism, or no handle and no keying mechanism.

Stacking the fluid treatment segments along the holder may also include stacking segments containing air in the fluid passages and the permeable fluid treatment media. Alternatively, stacking the fluid treatment segments along the holder may include stacking one or more segments filled with a preservative fluid, e.g., a preservative gas or liquid. For some embodiments, the preservative fluid may comprise only a single component, e.g., water or alcohol. The single component may serve to prewet, and maintain the wetness of, the fluid passages; the feed, permeate, and/or retentate regions; and the permeable fluid treatment media. For other embodiments, the preservative fluid may comprise a mixture of components including, for example, a carrier gas or liquid and any of a wide variety of biocides to maintain the sterility of the fluid treatment segments during storage, shipping, and/or assembly. When the fluid treatment segments contain a preservative fluid, the inlets, outlets, and fluid openings, including the through holes in the end plates, may be plugged or blocked in any of numerous ways to prevent escape of the preservative fluid. During or prior to assembly in the holder the inlets, outlets and fluid openings may be unplugged or unblocked. The fluid treatment segments may then be emptied of the preservative fluid prior to assembly in the holder, or they may be stacked in the holder while containing the preservative fluid, after which the preservative fluid may be flushed from the segments.

Once the fluid treatment segments 11, or the segments and manifold(s) 12, have been stacked between the end pieces 54, 55 of the holder 53 to form the fluid treatment assembly 10, the end pieces 54, 55 may be pressed against the ends of the fluid treatment assembly 10. Pressing the end pieces may include hydraulically, pneumatically, or mechanically moving one or both of the end pieces toward one another and against the ends of the fluid treatment assembly. For example, as shown in Fig. 5, tie rods 66 may be tightened against one or both of the end pieces 54, 55 to force the end pieces 54, 55 against the ends of the fluid treatment assembly 10. Pressing the end pieces against the fluid treatment assembly may include compressing and/or sealing the components of the fluid treatment assembly against one another and energizing the seals between the components. For example, the raised portions 48 at the fluid openings 43, 44, 45 of adjacent end plates 14, 15 of adjacent fluid treatment segments 11 may be pressed against one another to seal the adjacent segments 11 to one another.

With the fluid treatment assembly appropriately compressed and sealed between the end pieces of the holder, the appropriate fluid conduits of the external system may be coupled to the feed inlet, the permeate outlet, and/or the retentate outlet of one or more manifolds. Feed fluid may then be introduced in the fluid treatment assembly, driving air or the preservative fluid out of the assembly ahead of the permeate and/or retentate and then treating the feed fluid in accordance with the fluid treatment characteristics of the permeable fluid treatment media. Either the permeate output to the external system or the retentate output to the external system, or both, may be the desired product. Further, the fluid treatment assembly may be a single-use assembly in which feed fluid may be passed or recirculated only once through the assembly. Alternatively, the fluid treatment assembly may be a multi-use assembly in which feed fluid may be passed or recirculated multiple times through the assembly. For example, after each use, the fluid treatment assembly may be easily disassembled by moving the end pieces of the holder away from one another. Each fluid treatment segment may then be removed from the holder and cleaned. The cleaned fluid treatment segments may then be again stacked between the end pieces of the holder and pressed against, and sealed to, one another as previously described, enabling the fluid treatment assembly to be used again.

While various aspects of the invention have been described and/or illustrated with respect to several embodiments, the invention is not limited to these embodiments. For instance, one or more aspects of an embodiment may be eliminated or modified or one or more aspects of one embodiment may be combined with one or more aspects of another embodiment without departing from the scope of the invention. Even embodiments with very different features may be within the scope of the invention. For example, an end plate and a manifold may be combined into a single structure, and the end plate may additionally function as a manifold. The end plate may then include one or more fluid inlets and/or outlets, for example, on the edge(s) of the end plate and one or more fluid passages that enable the fluid inlets and/or outlets to fluidly communicate with the array of fluid treatment units. In addition to the fitting(s) and fluid passage(s), the end plate may have one or more through holes that enable the end plate to fluidly communicate with an end plate of an adjacent fluid treatment segment.

Further modifications and variations may become apparent to those of ordinary skill in the art upon reviewing the foregoing description and the attached drawings. Accordingly, the invention includes all variations, modifications, and equivalents of the subject matter recited in the following claims.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. A fluid treatment assembly comprising:
a stack of fluid treatment segments, wherein each fluid treatment segment includes:
an array of fluid treatment units having first and second opposite ends, wherein each fluid treatment unit has a feed region, a permeate region and a layer of permeable fluid treatment medium positioned between the feed region and the permeate region, the permeable medium including a feed side fluidly communicating with the feed region and an opposite permeate side fluidly communicating with the permeate region, wherein the array of fluid treatment units has one or more of a feed passage which fluidly communicates with the feed region of one or more fluid treatment units, a permeate passage which fluidly communicates with the permeate region of one or more fluid treatment units, and a retentate passage which fluidly communicates with the feed region of one or more fluid treatment units and wherein at least one of the first and second ends of the array has one or more fluid openings, each fluid opening fluidly communicating with the feed passage, the permeate passage, or the retentate passage,
first and second end plates, wherein each end plate has first and second opposite surfaces, the first surface of the first end plate facing the first end of the array of fluid treatment units and the first surface of the second end plate facing the second end of the array of fluid treatment units, and
a retainer extending along the array of fluid treatment units between the first and second end plates, wherein the retainer is arranged to compress the first end plate, the array of fluid treatment units, and the second end plate together; and
wherein adjacent end plates of one or more pairs of adjacent fluid treatment segments are sealed to one another, each of the adjacent end plates having one or more through holes extending between the first and second surfaces, the through holes of the adjacent end plates fluidly communicating with one another between a fluid opening in an end of one array of fluid treatment units and a fluid opening in an end of the adjacent array of fluid treatment units, and
wherein the retainers of adjacent fluid treatment segments are separate from one another.

2. The fluid treatment assembly of claim 1 wherein each retainer comprises one or more elongate structures extending along the array of fluid treatment units and bearing against the first and second end plates, the one or more elongate structures of one fluid treatment segment being separate from the one or more elongate structures of an adjacent fluid treatment segment.

3. The fluid treatment assembly of any preceding claim wherein the stack of fluid treatment segments has a first side, a second side opposite the first side, a third side, and a fourth side opposite the third side and wherein the retainer of a first fluid treatment segment extends along the first and second sides and not along the third and fourth side of the first fluid treatment segment and the retainer of an adjacent fluid treatment segment extends along the third and fourth sides and not along the first and second sides of the adjacent fluid treatment segment.

4. The fluid treatment assembly of any preceding claim further comprising a keying arrangement mechanically orienting adjacent fluid treatment segments to align a through hole of one fluid treatment segment with a through hole of an adjacent fluid treatment segment.

5. The fluid treatment assembly of any preceding claim wherein the array of fluid treatment units of each fluid treatment segment comprises one or more cassettes sealed to one another between the first and second end plates, each cassette including a plurality of fluid treatment units.

6. The fluid treatment assembly of any preceding claim further comprising a manifold including at least one fluid fitting and a first surface having a fluid opening fluidly coupled to the fluid fitting, the fluid opening in the first surface of the manifold fluidly communicating with a feed passage, a permeate passage, or a retentate passage of a fluid treatment segment.

7. A fluid treatment system comprising a holder having opposite end pieces and a fluid treatment assembly of any of claims 1-6 pressed between the end pieces of the holder.

8. A method of making a fluid treatment system including a fluid treatment assembly of any one of claims 1-6 comprising:
stacking the fluid treatment segments to form the fluid treatment assembly between end pieces of a holder, including aligning through holes of one or more pairs of adjacent fluid treatment segments, and
pressing the end pieces against the fluid treatment assembly to seal the fluid treatment assembly between the end pieces, including sealing adjacent fluid treatment segments.

9. A fluid treatment segment comprising:
an array of fluid treatment units having first and second opposite ends, wherein each fluid treatment unit has a feed region, a permeate region and a layer of permeable medium positioned between the feed region and the permeate region, the permeable medium including a feed side fluidly communicating with the feed region and an opposite permeate side fluidly communicating with the permeate region, wherein the array of fluid treatment units has one or more of a feed passage which fluidly communicates with the feed region of one or more fluid treatment units in the array, a permeate passage which fluidly communicates with the permeate region of one or more fluid treatment units in the array, and a retentate passage which fluidly communicates with the feed region of one or more fluid treatment units in the array, and wherein at least one of the first and second ends of the array has one or more fluid openings, each fluid opening fluidly communicating with the feed passage, the permeate passage, or the retentate passage;
first and second end plates, wherein each end plate has first and second opposite surfaces, the first surface of the first end plate facing the first end of the array of fluid treatment units and the first surface of the second end plate facing the second end of the array of fluid treatment units and wherein at least one of the first and second end plates has a through hole extending between the first and second surfaces and fluidly communicating with a fluid opening in an end of the array of fluid treatment units, the through hole being defined by a wall of the end plate and further including a lining that isolates the wall from fluid that flows through the through hole; and
a retainer extending along the array of fluid treatment units between the first and second end plates, wherein the retainer is arranged to compress the first end plate, the array of fluid treatment units, and the second end plate.

10. The fluid treatment segment of claim 9 further comprising a seal on the end plate surrounding the through hole.

11. The fluid treatment segment of claim 9 or 10 further comprising a manifold including at least one fluid fitting and a first surface having a fluid opening fluidly coupled to the fluid fitting, the fluid opening in the first surface of the manifold fluidly communicating with a feed passage, a permeate passage, or a retentate passage of the array of fluid treatment units, the retainer compressing the end plates, the manifold, and the array of fluid treatment units.

12. The fluid treatment segment of claim 9 or 10 wherein each through hole is closed and the fluid treatment segment is filled with a preservative fluid.

13. A fluid treatment segment comprising:
an array of fluid treatment units having first and second opposite ends, wherein each fluid treatment unit has a feed region, a permeate region and a layer of permeable medium positioned between the feed region and the permeate region, the permeable medium including a feed side fluidly communicating with the feed region and an opposite permeate side fluidly communicating with the permeate region, wherein the array of fluid treatment units has one or more of a feed passage which fluidly communicates with the feed region of one or more fluid treatment units in the array, a permeate passage which fluidly communicates with the permeate region of one or more fluid treatment units in the array, and a retentate passage which fluidly communicates with the feed region of one or more fluid treatment units in the array, and wherein at least one of the first and second ends of the array has one or more fluid openings, each fluid opening fluidly communicating with the feed passage, the permeate passage, or the retentate passage;
first and second end plates, wherein each end plate has first and second opposite surfaces, the first surface of the first end plate facing the first end of the array of fluid treatment units and the first surface of the second end plate facing the second end of the array of fluid treatment units and wherein at least one of the first and second end plates has a handle which allows the fluid treatment segment to be grasped and carried; and
a retainer extending along the array of fluid treatment units between the first and second end plates, wherein the retainer is arranged to compress the first end plate, the array of fluid treatment units, and the second end plate.

14. The fluid treatment segment of claim 13 further comprising a manifold including at least one fluid fitting and a first surface having a fluid opening fluidly coupled to the fluid fitting, the fluid opening in the first surface of the manifold fluidly communicating with a feed passage, a permeate passage, or a retentate passage of the array of fluid treatment units, the retainer compressing the end plates, the manifold, and the array of fluid treatment units.

15. The fluid treatment segment of claim 13 or 14 wherein the handle comprises a first handle and the fluid treatment segment further comprises a second handle, the first and second handles being formed on opposite sides of said one of the first and second end plates.
